# FASCICULE DE BREVET EUROPEEN

(11) **EP 4 263 256 B1**
(45) Date de publication et mention de la délivrance du brevet: **05.02.2025**
(21) Numéro de dépôt: 21836070.9
(22) Date de dépôt: 07.12.2021
(51) Int. Cl.: B60K 11/04

(54) **AGENCEMENT POUR VÉHICULE AUTOMOBILE D'UN MODULE DE STOCKAGE ET/OU DE CIRCULATION D'UN FLUIDE**
ANORDNUNG EINES FLÜSSIGKEITSSPEICHER- UND/ODER -KREISLAUFMODULS FÜR EIN KRAFTFAHRZEUG
ARRANGEMENT OF A FLUID STORAGE AND/OR CIRCULATION MODULE FOR A MOTOR VEHICLE

(30) Priorité: 15.12.2020 FR 2013274
(43) Date de publication de la demande: 25.10.2023
(73) Titulaire: Renault s.a.s, 92100 Boulogne Billancourt (FR)
(72) Inventeur: LECROQ, Dominique, 27540 IVRY LA BATAILLE (FR); GROSSIER, Thierry, 91510 Lardy (FR)
(86) Numéro de dépôt international: PCT/EP2021/084672
(87) Numéro de publication internationale: WO 2022/128647

(56) Documents cités:
- FR-A1- 2 561 998
- FR-A1- 3 034 826
- FR-A3- 2 944 769
- US-A1- 2019 061 512

## Description

La présente invention concerne un agencement pour véhicule automobile d'un module de stockage et/ou de circulation d'un fluide, notamment d'un liquide, et un véhicule automobile comprenant un tel agencement. L'invention concerne également un procédé d'assemblage dudit agencement.

Dans les véhicules automobiles, il est connu de disposer un module de refroidissement tel qu'un radiateur dans le compartiment avant du véhicule. Un tel module est classiquement monté sur des traverses ou un élément de support par l'intermédiaire de dispositifs de fixation. Notamment, de tels dispositifs de fixation visent à pallier à l'imprécision du positionnement du module résultant des marges d'erreur des procédés d'usinages et de montage du véhicule automobile, phénomène connu par le terme de « dispersion ». Une telle dispersion s'accompagne de complications lors du montage des modules de refroidissement, qui nécessitent d'être fixés au niveau de leur portion supérieure et de leur portion inférieure. Ils sont classiquement au moins en partie élastiques afin de compenser la dispersion globale des différentes pièces et garantir un jeu nul, ou réduit, après fixation du module sur le support considéré, c'est-à-dire lorsque le module est vide et n'assure pas le stockage et/ou la circulation d'un fluide, en particulier d'un liquide.

Un inconvénient de tels dispositif de fixation est qu'ils ne permettent pas de prendre en compte l'augmentation de la masse, et donc la variation de la position, du module une fois celui-ci rempli du liquide. En effet, un tel remplissage est réalisé en fin de ligne d'assemblage, c'est-à-dire une fois les différents dispositifs de fixation installés. L'augmentation de la masse du module du fait de son remplissage s'accompagne de la déformation des dispositifs de fixation et de l'apparition d'un jeu qui sera notamment dépendant de l'écart de masse vide/plein du module. Il résulte de ce jeu créé après remplissage des sollicitations vibratoires du module qui ont pour conséquence la fragilisation et l'usure prématurées des différents composants.

Un tel inconvénient est d'autant plus accentué par l'augmentation des dimensions des modules de refroidissement, notamment du fait de l'évolution des normes réglementaires.

Un état de la technique est connu du document FR 3 034 826 A1 qui décrit un agencement pour un véhicule automobile, l'agencement comprenant un module de refroidissement et des dispositifs primaires et secondaires de fixation du module sur un élément de support.

L'invention s'inscrit donc dans ce contexte et vise à proposer un agencement dans lequel un dispositif de fixation est configuré pour présenter un jeu adapté après remplissage du module qu'il porte, c'est-à-dire adapté à une variation de la masse et/ou de la position d'un tel module selon qu'il est vide ou rempli d'un fluide.

A cet fin, l'invention propose un agencement pour un véhicule automobile, l'agencement comprenant un module de stockage et/ou de circulation d'un liquide, notamment un module de refroidissement, un élément de support du module, au moins un dispositif primaire de fixation du module sur l'élément de support et au moins un dispositif secondaire de fixation du module sur l'élément de support, -le dispositif secondaire de fixation étant configuré pour supporter au moins en partie le poids du module. L'agencement est caractérisé en ce que :
- le dispositif primaire de fixation comprend un plot mobile par rapport à l'élément de support entre une première position stable et une deuxième position stable;
- ledit plot est agencé et configuré pour exercer un effort du haut vers le bas sur le module le long d'une direction lorsqu'il est déplacé vers la deuxième position stable, une course K du plot le long de ladite direction, entre la première position stable et la deuxième position stable, étant supérieure ou égale à une variation de position Δz le long de la direction du module par rapport à l'élément de support entre une configuration dans laquelle le module est vide et une configuration dans laquelle le module est rempli de liquide.

Le dispositif primaire de fixation peut notamment comprendre une patte de guidage du plot et au moins une patte de fixation sur l'élément de support, la patte de guidage comprenant au moins un moyen de guidage du plot, apte à recevoir le plot, et la patte de fixation comprenant une ouverture configurée pour recevoir un moyen de fixation, notamment une vis.

Le plot peut comprendre une embase configurée pour s'étendre au contact d'un bord inférieur du moyen de guidage. L'embase peut comprendre au moins un palier primaire, plan ou sensiblement plan, et au moins un palier secondaire, plan ou sensiblement plan, séparé de l'au moins un palier primaire par une hauteur H mesurée le long de la direction et égale à la course K du plot entre sa première position stable et sa deuxième position stable, l'au moins un palier primaire et l'au moins un palier secondaire étant reliés par une rampe. En outre, le bord inférieur du moyen de guidage peut être au moins en partie complémentaire de l'embase.

Notamment, la rampe peut présenter une inclinaison α, relativement à un plan dans lequel s'inscrit le palier primaire, comprise entre 5 et 75°, l'inclinaison α étant définie en fonction de la variation de position Δz du module.

De manière optionnelle, le dispositif primaire de fixation peut comprendre au moins un renfort, par exemple un renfort s'étendant au moins le long de la direction de déplacement du plot entre la première position stable et la deuxième position stable.

Selon un mode de réalisation, le dispositif primaire de fixation peut comprendre un levier de préhension rapporté et monté solidaire du plot de sorte à permettre le déplacement du plot entre la première position stable et la deuxième position stable. L'agencement peut alors, par exemple, comprendre en outre, un équipement configuré pour être en interférence avec le levier de préhension lorsque le plot est disposé dans la première position.

Le dispositif secondaire peut au moins en partie être réalisé en caoutchouc, la course K peut alors, en outre, être définie en fonction d'une raideur du dispositif primaire de fixation et/ou en fonction d'une raideur du dispositif secondaire de fixation.

L'invention concerne également un véhicule automobile comprenant un agencement tel qu'exposé précédemment.

L'invention concerne enfin un procédé d'assemblage d'un agencement selon l'invention pouvant comprendre :
- une étape de fixation d'au moins un dispositif primaire de fixation sur le module de stockage et/ou de circulation d'un liquide, vide ; puis
- une étape de positionnement du module équipé de l'au moins un dispositif primaire de fixation relativement à l'élément de support ; puis
- un étape de fixation, notamment par vissage, de l'au moins un dispositif primaire de fixation sur l'élément de support ; puis
- une étape de déplacement du plot du dispositif primaire de fixation depuis la première position vers la deuxième position de sorte à exercer un effort du haut vers le bas sur le module le long de la direction ; puis
- une étape de remplissage du module avec un liquide.

Notamment, le déplacement du plot, relativement au module, entre la première position et la deuxième position peut être réalisé selon un mouvement de rotation autour d'un axe de pivotement parallèle ou sensiblement parallèle à la direction et selon un mouvement de translation le long de cette même direction.

D'autres détails, caractéristiques et avantages ressortiront plus clairement à la lecture de la description détaillée donnée ci-après, à titre indicatif et non limitatif, en relation avec les différents exemples de réalisation illustrés sur les figures suivantes :
[Fig. 1] La figure 1 est une représentation schématique d'un agencement selon l'invention.
[Fig. 2] La figure 2 est une représentation schématique d'une partie de l'agencement illustrant un dispositif primaire de fixation monté sur une portion supérieure d'un module de stockage et/ou de circulation d'un liquide.
[Fig. 3] La figure 3 est une vue en perspective d'un exemple de réalisation d'un premier mode de réalisation du dispositif primaire de fixation.
[Fig. 4] La figure 4 est une vue en perspective d'un exemple de réalisation d'un deuxième mode de réalisation du dispositif primaire de fixation.
[Fig. 5] La figure 5 est une vue en perspective d'une première position du dispositif primaire de fixation tel qu'illustré à la figure 4.
[Fig. 6] La figure 6 est une vue en perspective d'une deuxième position du dispositif primaire de fixation tel qu'illustré à la figure 4.
[Fig. 7] La figure 7 est une vue en perspective d'une alternative de réalisation du deuxième mode de réalisation du dispositif primaire de fixation.
[Fig. 8] La figure 8 est une vue en perspective schématique du dispositif primaire de fixation tel qu'illustré à la figure 7, lorsqu'il est dans la deuxième position telle qu'illustrée à la figure 6.

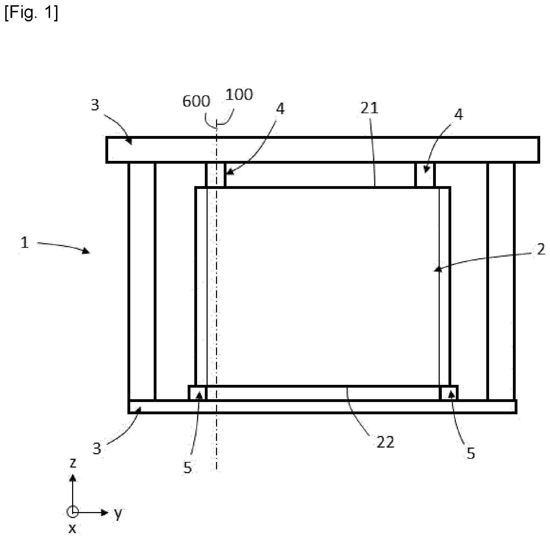

La figure 1 illustre un exemple d'un agencement 1 pour un véhicule automobile, par exemple de type véhicule utilitaire. L'agencement 1 selon l'invention comprend, de manière générale, un module 2 de stockage et/ou de circulation d'un liquide, un élément de support 3 du module 2, au moins un dispositif primaire 4 de fixation du module 2 sur l'élément de support 3 et au moins un dispositif secondaire 5 de fixation du module 2 sur l'élément de support 3.

Le module 2 de stockage et/ou de circulation peut, selon un exemple particulier non limitatif, être un module 2 de refroidissement dans lequel circule un liquide de refroidissement, tel que par exemple de l'eau glycolée, ou un lubrifiant tel que de l'huile, ou tout autre fluide ayant une influence sur la masse du module de stockage et/ou de circulation, une fois ce dernier rempli. Le module 2 de refroidissement peut notamment comprendre au moins un échangeur de chaleur ou radiateur configuré pour mettre en oeuvre un échange thermique entre un flux d'air extérieur, par exemple issu de la face avant du véhicule, et le liquide circulant dans le module 2.

Selon un exemple de réalisation, l'élément de support 3 du module 2 peut être compris dans une face avant technique du véhicule, l'élément de support 3 peut alors comprendre au moins une partie d'un compartiment ou boîtier d'un groupe motopropulseur (ou GMP). En particulier, le module 2 peut être monté solidaire d'au moins une traverse, supérieure et/ou inférieure, et/ou d'une paroi d'un tel compartiment ou boîtier apte à recevoir le dispositif primaire 4 de fixation et/ou le dispositif secondaire 5 de fixation.

Au sein de l'agencement 1, le dispositif secondaire 5 de fixation est configuré pour supporter au moins en partie le poids du module 2. Notamment, le dispositif secondaire 5 peut être au moins en partie réalisé dans un matériau élastiquement déformable tel que du caoutchouc. En d'autres termes, le dispositif secondaire 5 de fixation peut être disposé de sorte à être au moins en partie interposé entre le module 2 et l'élément de support 3 le long d'une direction 100, parallèle ou sensiblement parallèle à une direction verticale.

Dans l'ensemble de la présente description, on définira l'orientation de l'agencement 1 en fonction d'un axe longitudinal X, correspondant à une direction d'avancement du véhicule, d'un axe transversal Y, orthogonal au premier axe X, et d'un axe vertical Z, orthogonal au premier axe X et au deuxième axe Y. Dans un tel repère, la direction verticale est définie pour un véhicule positionné sur un sol plat. Les axes X, Y et Z sont notamment représentés par un trièdre XYZ dans les figures le nécessitant.

En ce sens, les termes « haut », « bas », « supérieur » et « inférieur » sont définis relativement à leur position le long de l'axe Z, c'est-à-dire le long de la direction verticale. Egalement, dans l'ensemble des figures, les dimensions et espacements séparant les différents composants peuvent être exagérés à des fins de clarté.

Dans l'exemple illustré à la figure 1, l'au moins un dispositif primaire 4 de fixation est disposé sur une portion supérieure du module 2 tandis que l'au moins un dispositif secondaire 5 de fixation est disposé au niveau d'une portion inférieure du module 2. En particulier, l'au moins un dispositif primaire 4 de fixation est disposé au niveau d'une face extrême supérieure 21 tandis que l'au moins un dispositif secondaire 5 de fixation est disposé au niveau d'une face extrême inférieure 22, opposée à la face extrême supérieure 21 du module 2 le long de l'axe Z.

En l'espèce, l'agencement 1 comprend deux dispositifs primaires 4 de fixation, montés sur la portion supérieure du module 2, et deux dispositifs secondaires 5 de fixation, montés sur la portion inférieure du module 2. Il est entendu qu'un tel exemple n'est en rien limitatif et que l'agencement 1 pourra comprendre un nombre différent de dispositifs primaires 4 et/ou secondaires 5 de fixation. Aussi, tout ou partie des caractéristiques décrites en référence au dispositif primaire 4 de fixation pourront s'étendre à tout ou partie d'une pluralité de dispositifs primaires 4 de fixation. Il en va de même pour le dispositif secondaire 5 de fixation.

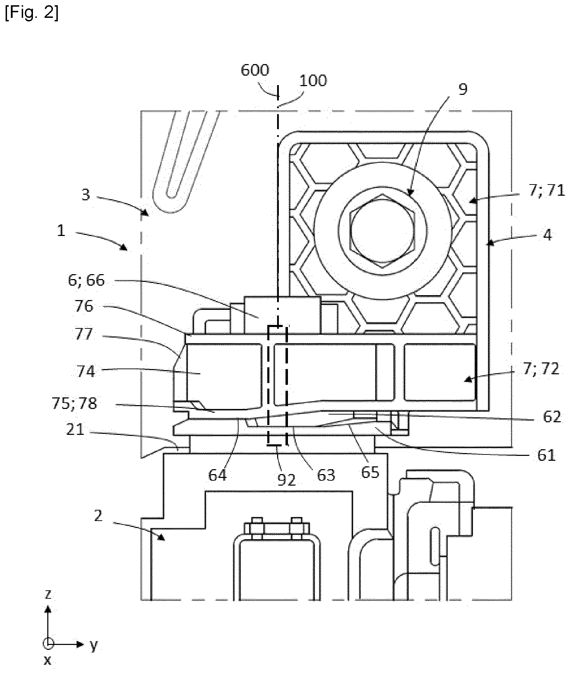

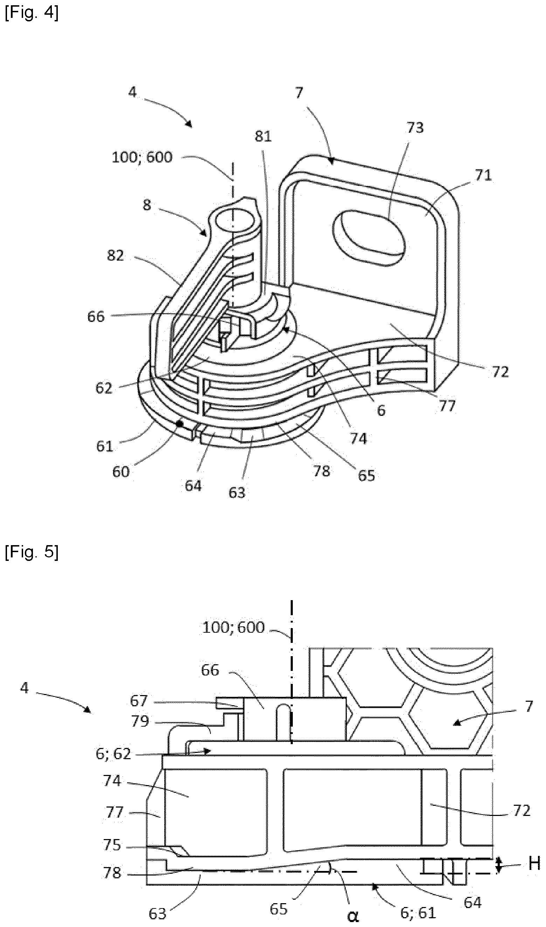

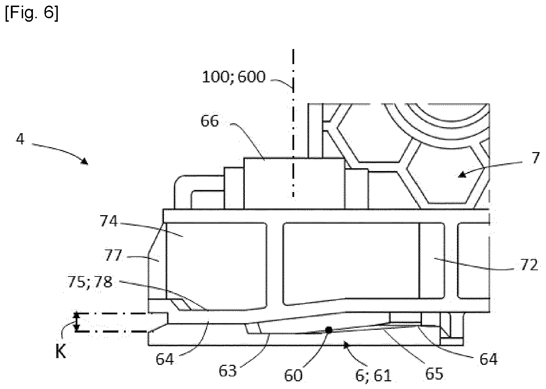

Le dispositif primaire 4 de fixation, détaillé à la figure 2, comprend un plot 6 monté mobile par rapport à l'élément de support 3. Egalement, le plot 6 est mobile relativement au module 2. Selon un exemple de réalisation, le plot 6 peut être réalisé dans un matériau élastomère, par exemple en Éthylène Propylène Diène Monomère (EPDM), ce qui lui permet de remplir une fonction d'amortissement et un travail efficace en compression le long de la direction 100. Le plot 6 peut être déplacé relativement au module 2 et à l'élément de support 3 entre une première position stable et une deuxième position stable, respectivement illustrées aux figures 5 et 6. Le plot 6 peut, par exemple, être monté sur le module 2 par l'intermédiaire d'un pion 92, schématiquement représenté en pointillés à la figure 2, s'étendant au travers du plot 6.

On entend par « position stable » une position dans laquelle demeure le plot lorsque qu'un effort nécessaire à sa mise en mouvement est interrompu.

En particulier et tel que détaillé ci-après en référence au procédé d'assemblage, le plot 6 peut être configuré pour être déplacé entre la première position stable et la deuxième position stable selon une combinaison d'un mouvement de rotation autour d'un axe de pivotement 600 parallèle ou sensiblement parallèle à la direction 100, et d'un mouvement de translation le long de ce même axe de pivotement 600.

Selon une alternative non illustrée, le plot 6 peut être configuré pour être déplacé selon un mouvement de translation le long d'un axe parallèle ou sensiblement parallèle à la direction 100.

Le plot 6 est particulièrement agencé et configuré pour exercer un effort du haut vers le bas sur le module 2 le long de la direction 100 lorsqu'il est déplacé vers la deuxième position. Particulièrement, selon l'invention, une course K dudit plot 6 entre sa première position stable et sa deuxième position stable est supérieure ou égale à une variation de position Δz du module 2 relativement à l'élément de support 3 entre une configuration dans laquelle le module 2 est vide et une configuration dans laquelle le module 2 est rempli de liquide.

De manière particulière, la course K peut, en outre, être définie en fonction d'une raideur du dispositif primaire 4 de fixation et/ou en fonction d'une raideur du dispositif secondaire 5 de fixation.

On entend par une « course K » du plot 6 son déplacement le long de la direction 100, c'est-à-dire le long de la direction verticale, lorsqu'il est déplacé entre la première position stable et la deuxième position stable, que le plot 6 soit déplacé selon une combinaison d'un mouvement de translation et d'un mouvement de rotation ou qu'il soit déplacé selon un mouvement de translation tels que précédemment exposés.

On entend par « une variation de position Δz » du module 2 un écart prédéfini de position d'un point du module 2, par exemple un point de la face extrême supérieure 21 du module 2, relativement à l'élément de support 3 et le long de la direction 100. Une telle variation est classiquement observée pour un module dépourvu du dispositif primaire 4 de fixation tel que décrit dans la présente invention, lorsque celui-ci passe d'une configuration « vide » à une configuration « rempli ». Des valeurs d'une telle variation de position Δz peuvent notamment être issues d'une base de donnée pour des modèles ou des dimensions de modules prédéterminés ou encore des volumes de liquides prédéfinis.

On entend ainsi par configuration « vide » que l'agencement 1, en particulier le module 2, est dépourvu de liquide et qu'il n'assure ni le stockage, ni la circulation d'un tel liquide. Une telle configuration peut être observée sur la chaîne de montage du véhicule, préalablement au remplissage du module 2, ou lors d'intervention de manutention au niveau du module 2 ou d'un circuit d'alimentation, non représenté, du module 2 en liquide.

A l'inverse, dans la configuration « remplie », le module 2 comprend le liquide, c'est-à-dire qu'il en assure le stockage par exemple en vue de sa circulation. Une telle configuration peut être observée ultérieurement au remplissage du module 2 sur la chaîne de montage ou encore dans un véhicule mis sur le marché ou en fonctionnement.

Le dispositif primaire 4 de fixation peut, en outre, comprendre au moins une patte de fixation 71 du dispositif primaire 4 sur l'élément de support 3 et une patte de guidage 72 du plot 6. Notamment, le dispositif primaire 4 de fixation peut comprendre une équerre 7 montée fixe sur l'élément de support 3, l'équerre 7 comprenant au moins la patte de fixation 71 de l'équerre 7 sur l'élément de support 3 et la patte de guidage 72 du plot 6.

La patte de fixation 71 et la patte de guidage 72 sont reliées et s'étendent transversalement l'une à l'autre. Selon un exemple particulier, la patte de fixation 71 et la patte de guidage 72 peuvent s'étendre au moins en partie perpendiculairement l'une à l'autre. Notamment, elles peuvent être venues de matière, c'est-à-dire qu'elles ne peuvent être dissociées l'une de l'autre sans résulter en la dégradation, voire la destruction, de l'équerre 7. Selon un exemple non limitatif, l'équerre 7 peut être réalisée en polyamide, notamment en polyamide chargé.

La patte de fixation 71 présente une structure plane ou sensiblement plane. Elle comprend une ouverture 73 ou perforation 73 configurée pour recevoir un moyen de fixation 9, notamment une vis. De manière avantageuse, une telle ouverture 73 ou perforation 73 peut être dimensionnée en fonction d'une dispersion globale Δd1 du dispositif primaire 4 de fixation et/ou en fonction d'une dispersion globale Δd2 du module 2. Notamment, de telles valeurs de dispersion globale Δd1, Δd2 peuvent être issues d'une base de données.

L'ouverture 73 ou la perforation 73 est dimensionnée pour assurer la fixation du dispositif primaire 4 de fixation sur l'élément de support 3, notamment au niveau d'un orifice ou insert prévu à cet effet, et pour compenser une marge d'erreur des dimensions, du fait de l'usinage en série des composants, du dispositif primaire 4 de fixation et/ou du module 2.

La patte de guidage 72 comprend au moins un moyen de guidage 74, tel qu'un manchon, apte à recevoir et guider, notamment le long de la direction 100, le plot 6. Un tel moyen de guidage 74 délimite une ouverture traversante dans laquelle vient s'étendre le plot 6 une fois l'agencement 1 assemblé, ladite ouverture s'étendant entre un bord inférieur 75 de la patte de guidage 72, tourné vers le module 2, et un bord supérieur 76, opposé au bord inférieur 75. Autrement dit, le plot 6 est monté mobile relativement à l'équerre 7 du dispositif primaire 4 de fixation.

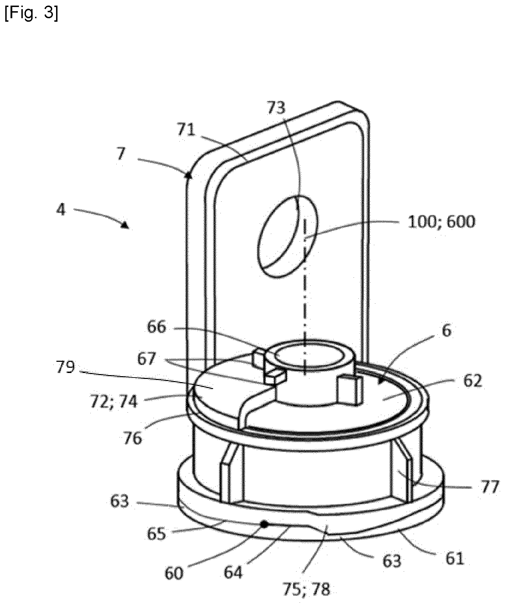

Avantageusement, l'équerre 7 peut comprendre au moins un renfort 77 s'étendant au moins le long de la direction 100. Selon différentes alternatives, le renfort 77 peut s'étendre en appui de la patte de guidage 72 et de la patte de fixation 71 ou peut être disposé dans l'épaisseur du moyen de guidage 74, tel que représenté aux figures 3 et 4.

Le plot 6 peut comprendre une embase 61 et un corps 62, reliés l'un à l'autre. Au moins le corps 62 présente une forme cylindrique ou sensiblement cylindrique, notamment de section circulaire, et complémentaire du moyen de guidage 74. Similairement, l'embase 61 peut présenter une forme cylindrique ou sensiblement cylindrique, par exemple de section circulaire.

Particulièrement, l'embase 61 forme un élargissement du plot 6 par rapport au corps 62. La section de l'embase 61 présente ainsi une dimension la plus longue, non représentée, supérieure à une dimension la plus longue du corps 62 du plot 6. On entend par exemple par « dimension la plus longue » un diamètre pour une section circulaire ou une diagonale pour une section polygonale.

Le corps 62 s'étend perpendiculairement à l'embase 61 de sorte que, lorsque l'agencement 1 est assemblé, l'embase 61 s'étend au contact du bord inférieur 75 du moyen de guidage 74 tandis que le corps 62 s'étend dans l'ouverture du moyen de guidage 74, depuis le bord inférieur 75 et au moins jusqu'au bord supérieur 76.

Tel qu'illustré aux figures 3 à 6, l'embase 61, notamment un pan supérieur 60 tourné vers le bord inférieur 75 de l'équerre 7 et destiné à coopérer avec celui-ci. L'embase 61 est configurée afin de définir une première surface de contact avec le bord inférieur 75 lorsque le dispositif primaire 4 de fixation est disposé selon la première position, représentée à la figure 5. Lorsque le plot 6 est déplacé dans la deuxième position stable, telle que représentée à la figure 6, l'embase 61 définit une deuxième surface de contact avec le bord inférieur 75, la première surface de contact pouvant notamment être strictement supérieure à la deuxième surface de contact.

En particulier, le pan supérieur 60 de l'embase 6 peut comprendre au moins un palier primaire 63, plan ou sensiblement plan, et au moins un palier secondaire 64, plan ou sensiblement plan. De tels paliers 63, 64 s'étendent transversalement à la direction 100, notamment horizontalement ou sensiblement horizontalement.

Le palier primaire 63 et le palier secondaire 64 sont séparés par une hauteur H, mesurée le long de la direction 100, égale à la course K du plot 6 entre sa première position stable et sa deuxième position stable. Particulièrement, l'embase 6 est configurée afin que, lorsque l'agencement est assemblé, le palier primaire 63 soit interposé entre le palier secondaire 64 et le module 2 le long de la direction 100.

Avantageusement, l'au moins un palier primaire 63 et l'au moins un palier secondaire 64 sont reliés par une rampe 65, l'ensemble successif d'un palier primaire 63, d'une rampe 65 et d'un deuxième participant à définir la trajectoire du plot 6 depuis la première position vers la deuxième position.

De manière particulière, une telle rampe 65 présente une inclinaison α comprise entre 5 et 75°, voire entre 5 et 60°, relativement à un plan dans lequel s'inscrit le palier primaire 63. Une telle inclinaison α est définie en fonction de la variation de position Δz du module 2 et donc en fonction de la course K du plot 6.

Lorsque le plot 6 comprend une pluralité de paliers primaires 63, ceux-ci s'inscrivent dans un même plan. De même, lorsque le plot 6 comprend une pluralité de paliers secondaires 64, ceux-ci sont compris dans un plan commun. L'embase 61 comprend alors une structure régulière formée d'une alternance d'un palier primaire 63 et d'un palier secondaire 64, le palier primaire 63 étant relié au palier secondaire 64 par une rampe 65 telle que décrite ci-dessus. De ce fait, la hauteur H séparant un palier primaire 63 d'un palier secondaire 64 adjacent est constante au sein d'un même plot 6. De préférence, il en va de même pour l'inclinaison des différentes rampes 65 considérées.

A noter que, dans l'exemple illustré, un premier palier secondaire 64 est relié à un palier primaire 63 adjacent par la rampe 65 d'une part et à un deuxième palier secondaire 64 par un bord sensiblement vertical. Alternativement le palier primaire 63 et le deuxième palier secondaire 64 peuvent être reliés par une rampe secondaire, d'inclinaison similaire ou distincte à la rampe 65 telle que décrite précédemment.

Afin d'assurer le déplacement du plot 6 relativement à la patte de guidage 72 avec un effort adapté, le bord inférieur 75 du moyen de guidage 74 peut être au moins en partie complémentaire de l'embase 61. Par exemple, le bord inférieur 75 peut comprendre au moins un palier inférieur 78 configuré pour s'étendre au contact du palier primaire 63 de l'embase 61 lorsque le plot 6 est disposé dans la première position stable et configuré pour s'étendre au contact du palier secondaire 64 lorsque le plot 6 est dans la deuxième position stable.

En outre, le plot 6 peut être conformé afin de coopérer avec un ou des outils permettant d'opérer son déplacement lors de l'assemblage de l'agencement 1 ou d'opérations de manutention. A titre d'exemple non limitatif, une extrémité libre du corps 62 peut comprendre une empreinte 66, telle qu'une empreinte BTR apte à coopérer avec une clé.

De manière avantageuse, afin de prévenir la séparation du plot 6 et de l'équerre 7 lors d'étapes de manutention, l'empreinte 66 peut comprendre au moins un organe de blocage 67 configuré pour limiter ou empêcher le déplacement du plot 6 relativement à l'équerre 7 le long d'un sens de la direction 100 lorsque le plot est disposé dans la première position stable. Notamment, un tel organe de blocage 67 peut être configuré pour venir en butée d'une portion de recouvrement 79 de l'équerre 7 lorsque le plot est dans la première position stable. Une telle portion de recouvrement 79 peut être issue de la patte de guidage 72, notamment du bord supérieur 76, et s'étend en regard d'une partie du corps 62 du plot 6 le long de la direction 100. Lorsque le plot 6 est déplacé vers la deuxième position stable, l'organe de blocage 67 est également déplacé à distance de la portion de recouvrement 79, permettant alors le déplacement du plot 6 le long de la direction 100.

Selon un mode de réalisation alternatif illustré à la figure 4, le dispositif primaire 4 de fixation peut avantageusement comprendre un levier de préhension 8 rapporté et monté solidaire du plot 6 de sorte à en permettre le déplacement entre la première position et la deuxième position. Notamment, le déplacement entre la première position et la deuxième position peut être réalisé par un tel mouvement de rotation du levier autour de l'axe de pivotement 600 compris entre 45 et 180°, par exemple entre 60 et 75°, voire de l'ordre de 90°. Un tel levier de préhension 8 comprend un embout 81 complémentaire du corps 62, particulièrement de l'empreinte 66 du corps 62 telle que décrite précédemment, et peut comprendre une aile de préhension 82 permettant la manipulation du levier par un utilisateur.

Le levier de préhension 8 demeure monté au sein de l'agencement 1, permettant avantageusement d'éliminer la nécessité d'un outil spécifique lors du montage ou démontage de l'agencement 1.

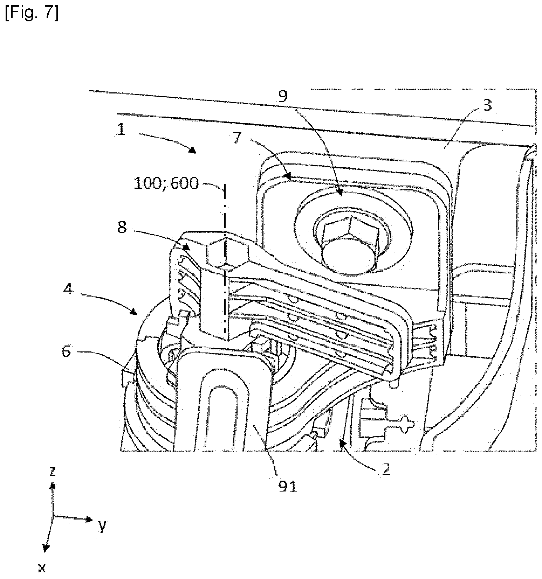

En outre, un tel levier de préhension 8 peut avoir une fonction de détrompage visuel ou mécanique d'une part et une fonction anti-oubli d'autre part. En effet, tel qu'illustré à la figure 7, lorsque le plot 6 est déplacé dans la deuxième position, le levier de préhension 8, notamment son aile de préhension 82, s'étend aux abords de la patte de fixation 71. Le moyen de fixation 9 est alors rendu inaccessible, prévenant le démontage du dispositif primaire 4 de fixation alors que celui-ci est dans la deuxième position, c'est-à-dire alors que celui-ci exerce un effort du haut vers le bas sur le module 2.

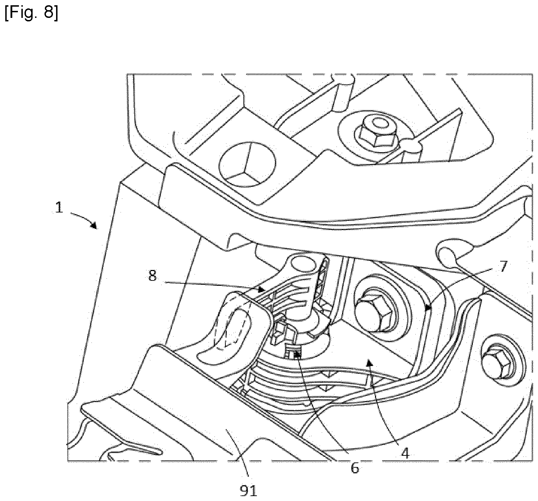

A l'inverse, tel qu'illustré à la figure 8, la face avant technique peut être aménagée de sorte à rendre impossible le montage final du véhicule si le module 2, n'a pas été mis sous effort. En l'espèce, l'agencement 1 est configuré de sorte que, lorsque le plot 6 est disposé dans la première position, l'installation d'un guide d'air 91 en face avant est rendue impossible par le levier de préhension 8, le positionnement du levier chevauchant en effet un emplacement destiné audit guide d'air 91, un tel chevauchement étant représenté en pointillés. Un tel arrangement permet d'assurer que plot 6 est positionné de manière adaptée afin que le dispositif primaire 4 exerce l'effort désiré sur le module 2 et que le procédé tel qu'exposé ci-après est exécuté correctement.

L'invention concerne également un procédé d'assemblage d'un agencement 1 tel qu'exposé précédemment, pris dans cet ordre.

Un tel procédé comprend une étape de montage d'au moins un dispositif secondaire 5 sur l'élément de support 3 ou, de manière alternative, sur le module 2, par exemple au niveau de la face extrême inférieure 22 du module 2.

Le procédé comprend une étape de fixation d'au moins un dispositif primaire 4 de fixation sur le module 2 vide.

Ensuite, particulièrement, pour chaque dispositif primaire 4 de fixation, le plot 6 est monté mobile relativement au module 2, par exemple par l'intermédiaire d'un pion. Le dispositif primaire 4 est disposé de sorte que l'embase 61 du plot 6 est interposée entre le module 2 et au moins une partie de l'équerre 7 le long de la direction 100. Particulièrement, l'embase 61 du plot 6 est au moins interposée entre le moyen de guidage 74 et le module 2 le long de la direction 100.

Ensuite, le module 2 équipé du ou des dispositif(s) primaire(s) de fixation est positionné relativement à l'élément de support 3. La patte de fixation 71 est agencée afin que l'ouverture 73 ou la perforation 73 soit disposée en regard d'un orifice ou d'un insert de l'élément de support 3 apte à recevoir le moyen de fixation 9. Le module 2 est alors positionné de sorte à ce que le ou les dispositif(s) secondaire(s) 5 de fixation supporte(nt) le poids du module.

Le procédé comprend ensuite une étape de fixation de l'au moins un dispositif primaire 4 de fixation, notamment par vissage, sur l'élément de support 3. Notamment, une telle étape comprend une sous-étape l'étape de solidarisation de l'équerre 7, par exemple de la patte de fixation 71 de l'équerre 7, sur l'élément de support 3 par l'intermédiaire du moyen de fixation 9, de manière à corriger ou compenser la dispersion globale Δd1 du dispositif primaire 4 de fixation et/ou la dispersion globale Δd2 du module 2.

Puis, une étape de déplacement du plot 6 du dispositif primaire 4 de fixation depuis la première position vers la deuxième position est exécutée. En l'espèce, un tel déplacement est réalisé selon une combinaison d'un mouvement de rotation autour de l'axe de pivotement 600 et d'un mouvement de translation le long de la direction 100, parallèle ou sensiblement parallèle à l'axe de pivotement 600. Notamment, un tel mouvement de rotation peut être compris entre 45 et 180°, par exemple entre 60 et 75°, voire de l'ordre de 90°.

Le déplacement du plot 6 peut être exécuté, tel que précédemment exposé, par l'intermédiaire d'un outil ou par l'intermédiaire du levier de préhension 8.

Le déplacement du plot 6 peut alors comprendre une sous-étape de déplacement d'un point d'un palier inférieur 78 du bord inférieur 75 du moyen de guidage 74 depuis un palier primaire 63 de l'embase 61, lorsque le plot 6 est dans la première position, vers un palier secondaire 64 séparé de l'au moins un palier primaire 63 par une hauteur H mesurée le long de la direction 100. Un tel point est notamment déplacé le long de la rampe 65 reliant le palier primaire 63 et le palier secondaire 64, laquelle peut présenter une inclinaison α relativement au palier primaire 63 comprise entre 5 et 75° et définie en fonction de la variation Δz de position du module 2.

Lorsque le plot 6 est déplacé vers la deuxième position, il exerce un effort du haut vers le bas sur le module 2 le long de la direction 100. Un tel effort est maximal lorsque le plot 6 est dans la deuxième position et est minimal, voire nul, lorsque le plot 6 est disposé dans la première position. A noter que le déplacement du plot 6 comprend au moins une position intermédiaire, non représentée, comprise entre la première position stable et la deuxième position stable. Une telle position intermédiaire est de préférence instable, c'est-à-dire que lorsqu'un utilisateur interrompe le mouvement du plot 6 au niveau de ladite position intermédiaire, le plot 6 revient naturellement dans la première position stable ou dans la deuxième position stable, en l'espèce dans la première position stable.

Dans les exemples illustrés, une telle position intermédiaire peut correspondre à un positionnement du palier inférieur 78 du moyen de guidage 74 au droit d'une partie de la rampe 65. En outre, dans une telle position intermédiaire, l'effort exercé sur le module 2 est inférieur ou sensiblement inférieur à l'effort exercé lorsque le plot 6 est dans la deuxième position.

Tel qu'exposé précédemment, la course K du plot 6 le long de la direction 100, entre la première position stable et la deuxième position stable, est particulièrement définie de sorte à être supérieure ou égale à la variation de position Δz le long de la direction 100 du module 2 par rapport à l'élément de support 3 entre la configuration dans laquelle le module 2 est vide et la configuration dans laquelle le module 2 est rempli de liquide.

De ce fait, lorsque le plot 6 est disposé dans la deuxième position, il exerce un effort du haut vers le bas le long de la direction 100 sur le module 2. Celui-ci transmet un tel effort au dispositif secondaire 5 de fixation qui, étant élastiquement déformable, subit un écrasement. En d'autres termes, lorsque le plot 6 est déplacé vers la deuxième position, il exerce indirectement un effort du haut vers le bas sur le dispositif secondaire 5 de fixation. Le dispositif secondaire 5 de fixation exerce alors un contre-effort, opposé à l'effort du dispositif primaire 4 de fixation, du bas vers le haut le long de la direction 100.

Il en résulte que le module 2 vide est stabilisé le long de la direction 100, c'est-à-dire verticalement, dans une position prédéterminée afin que l'ajout ultérieur de liquide dans le module 2 ne s'accompagne pas d'une variation du contre-effort mis en oeuvre par le dispositif secondaire 5 de fixation, contrairement à ce qui peut être classiquement observé dans état de l'art. En d'autres termes, le module 2 vide est ainsi stabilisé le long de la direction 100 dans une position prédéterminée et précontrainte afin que l'écart de masse du module 2, résultant de l'ajout du liquide, s'accompagne d'une variation de la position Δz du module 2, entre la configuration vide et la configuration pleine, nulle ou négligeable.

De la sorte, tout jeu défini au niveau du dispositif primaire 4 de fixation lorsque le module 2 est installé et vide, c'est-à-dire en configuration vide, reste constant ou sensiblement constant, même après remplissage du module 2, c'est à dire en configuration rempli, préservant ainsi les composants de l'agencement 1 d'une usure prématurée.

Le module 2 peut ensuite être rempli avec le liquide, notamment avec un liquide de refroidissement, l'ajout de masse n'ayant alors pas d'incidence sur la position du module 2 le long de la direction 100 ou sur l'effort exercé sur le dispositif secondaire 5 de fixation, c'est-à-dire sur son écrasement.

La présente invention propose ainsi un agencement pour véhicule automobile comprenant un module de stockage et/ou de circulation d'un liquide, un élément de support dudit module, au moins un dispositif primaire de fixation du module sur l'élément de support et au moins un dispositif secondaire de fixation du module sur l'élément de support, un tel agencement étant d'installation simple et pouvant être réalisé à faible coût tout en permettant avantageusement de s'affranchir des variations de masse, et donc des variations de position, du module entre une configuration vide et une configuration rempli avec le liquide, préservant de ce fait les composants dudit agencement d'une usure prématurée.

La présente invention ne saurait toutefois se limiter aux moyens et configurations décrits et illustrés ici, la portée de la présente invention étant définie par les revendications. En particulier la forme et les dimensions du plot ou de l'équerre du dispositif primaire de fixation peuvent être modifiés.

## Revendications

1. Agencement (1) pour un véhicule automobile, l'agencement (1) comprenant un module (2) de stockage et/ou de circulation d'un liquide, notamment un module de refroidissement, un élément de support (3) du module (2), au moins un dispositif primaire (4) de fixation du module (2) sur l'élément de support (3) et au moins un dispositif secondaire (5) de fixation du module (2) sur l'élément de support (3), le dispositif secondaire (5) de fixation étant configuré pour supporter au moins en partie le poids du module (2), **caractérisé en ce que** :
- le dispositif primaire (4) de fixation comprend un plot (6) mobile par rapport à l'élément de support (3) entre une première position stable et une deuxième position stable;
- ledit plot (6) est agencé et configuré pour exercer un effort du haut vers le bas sur le module (2) le long d'une direction (100) lorsqu'il est déplacé vers la deuxième position stable, une course (K) du plot (6) le long de ladite direction (100), entre la première position stable et la deuxième position stable, étant supérieure ou égale à une variation de position (Δz) le long de la direction (100) du module (2) par rapport à l'élément de support (3) entre une configuration dans laquelle le module (2) est vide et une configuration dans laquelle le module (2) est rempli de liquide.

2. Agencement (1) selon la revendication précédente, dans lequel le dispositif primaire (4) de fixation comprend une patte de guidage (72) du plot (6) et au moins une patte de fixation (71) sur l'élément de support (3), la patte de guidage (72) comprenant au moins un moyen de guidage (74) du plot (6), apte à recevoir le plot (6), et la patte de fixation (71) comprenant une ouverture (73) configurée pour recevoir un moyen de fixation (9), notamment une vis.

3. Agencement (1) selon la revendication précédente, dans lequel le plot (6) comprend une embase (61) configurée pour s'étendre au contact d'un bord inférieur (75) du moyen de guidage (74) :
- l'embase (61) comprenant au moins un palier primaire (63), plan ou sensiblement plan, et au moins un palier secondaire (64), plan ou sensiblement plan, séparé de l'au moins un palier primaire (63) par une hauteur (H) mesurée le long de la direction (100) et égale à la course (K) du plot (6) entre sa première position stable et sa deuxième position stable, l'au moins un palier primaire (63) et l'au moins un palier secondaire (64) étant reliés par une rampe (65) ;
- le bord inférieur (75) du moyen de guidage (74) étant au moins en partie complémentaire de l'embase (61).

4. Agencement (1) selon la revendication précédente, dans lequel la rampe (65) présente une inclinaison (α), relativement à un plan dans lequel s'inscrit le palier primaire (63), comprise entre 5 et 75°, l'inclinaison (α) étant définie en fonction de la variation de position (Δz) du module (2).

5. Agencement (1) selon l'une des revendications précédentes, dans lequel le dispositif primaire (4) de fixation comprend un levier de préhension (8) rapporté et monté solidaire du plot (6) de sorte à permettre le déplacement du plot (6) entre la première position stable et la deuxième position stable.

6. Agencement (1) selon la revendication précédente, comprenant, en outre, un équipement (91) configuré pour être en interférence avec le levier de préhension (8) lorsque le plot (6) est disposé dans la première position stable.

7. Agencement (1) selon l'une des revendications précédentes, dans lequel le dispositif secondaire (5) est au moins en partie réalisé en caoutchouc, la course (K) étant, en outre, définie en fonction d'une raideur du dispositif primaire (4) de fixation et/ou en fonction d'une raideur du dispositif secondaire (5) de fixation.

8. Véhicule automobile comprenant un agencement (1) selon l'une des revendications 1 à 7.

9. Procédé d'assemblage d'un agencement (1) selon l'une des revendications 1 à 7, comprenant :
- une étape de fixation d'au moins un dispositif primaire (4) de fixation sur le module (2) de stockage et/ou de circulation d'un liquide, vide ; puis
- une étape de positionnement du module (2) équipé de l'au moins un dispositif primaire (4) de fixation relativement à l'élément de support (3) ; puis
- un étape de fixation, notamment par vissage, de l'au moins un dispositif primaire (4) de fixation sur l'élément de support (3) ; puis
- une étape de déplacement du plot (6) du dispositif primaire (4) de fixation depuis la première position stable vers la deuxième position stable de sorte à exercer un effort du haut vers le bas sur le module (2) le long de la direction (100) ; puis
- une étape de remplissage du module (2) avec un liquide.

10. Procédé selon la revendication précédente, dans lequel le déplacement du plot (6), relativement au module (2), entre la première position stable et la deuxième position stable est réalisé selon un mouvement de rotation autour d'un axe de pivotement (600) parallèle ou sensiblement parallèle à la direction (100) et selon un mouvement de translation le long de cette même direction.

## Patentansprüche

1. Anordnung (1) für ein Kraftfahrzeug, wobei die Anordnung (1) ein Modul (2) zur Speicherung und/oder Zirkulation einer Flüssigkeit, insbesondere ein Kühlmodul, ein Stützelement (3) für das Modul (2), mindestens eine primäre Vorrichtung (4) zur Befestigung des Moduls (2) an dem Stützelement (3) und mindestens eine sekundäre Vorrichtung (5) zur Befestigung des Moduls (2) an dem Stützelement (3) beinhaltet, wobei die sekundäre Befestigungsvorrichtung (5) dazu konfiguriert ist, das Gewicht des Moduls (2) mindestens teilweise zu tragen, **dadurch gekennzeichnet, dass**:
- die primäre Befestigungsvorrichtung (4) einen Block (6) beinhaltet, der in Bezug auf das Stützelement (3) zwischen einer ersten stabilen Position und einer zweiten stabilen Position beweglich ist;
- der Block (6) dazu eingerichtet und konfiguriert ist, entlang einer Richtung (100) eine Kraft von oben nach unten auf das Modul (2) auszuüben, wenn er in die zweite stabile Position verschoben wird, wobei ein Hub (K) des Blocks (6) entlang der Richtung (100) zwischen der ersten stabilen Position und der zweiten stabilen Position größer als oder gleich einer Positionsänderung (Δz) des Moduls (2) entlang der Richtung (100) in Bezug auf das Stützelement (3) zwischen einer Konfiguration, in der das Modul (2) leer ist, und einer Konfiguration, in der das Modul (2) mit Flüssigkeit gefüllt ist, ist.

2. Anordnung (1) nach dem vorhergehenden Anspruch, wobei die primäre Befestigungsvorrichtung (4) eine Führungsklaue (72) für den Block (6) und mindestens eine Klaue zur Befestigung (71) an dem Stützelement (3) beinhaltet, wobei die Führungsklaue (72) mindestens ein Führungsmittel (74) für den Block (6) beinhaltet, das dazu fähig ist, den Block (6) aufzunehmen, und wobei die Befestigungsklaue (71) eine Öffnung (73) beinhaltet, die dazu konfiguriert ist, ein Befestigungsmittel (9), insbesondere eine Schraube, aufzunehmen.

3. Anordnung (1) nach dem vorhergehenden Anspruch, wobei der Block (6) einen Sockel (61) beinhaltet, der dazu konfiguriert ist, sich in Kontakt mit einer unteren Kante (75) des Führungsmittels zu erstrecken (74):
- wobei der Sockel (61) Folgendes beinhaltet: mindestens einen primären Absatz (63), der eben oder im Wesentlichen eben ist, und mindestens einen sekundären Absatz (64), der eben oder im Wesentlichen eben ist und von dem mindestens einen primären Absatz (63) durch eine Höhe (H) getrennt ist, die entlang der Richtung (100) gemessen wird und gleich dem Hub (K) des Blocks (6) zwischen seiner ersten stabilen Position und seiner zweiten stabile Position ist, wobei der mindestens eine primäre Absatz (63) und der mindestens eine sekundäre Absatz (64) durch eine Rampe (65) verbunden sind;
- wobei die untere Kante (75) des Führungsmittels (74) zu dem Sockel (61) mindestens teilweise komplementär ist.

4. Anordnung (1) nach dem vorhergehenden Anspruch, wobei die Rampe (65) relativ zu einer Ebene, in der der primäre Absatz (63) liegt, eine Neigung (α) zwischen 5 und 75° aufweist, wobei die Neigung (α) in Abhängigkeit von der Positionsänderung (Δz) des Moduls (2) definiert wird.

5. Anordnung (1) nach einem der vorhergehenden Ansprüche, wobei die primäre Befestigungsvorrichtung (4) einen Griffhebel (8) beinhaltet, der so an dem Block (6) angebracht und mit diesem fest verbunden ist, dass er die Verschiebung des Blocks (6) zwischen der ersten stabilen Position und der zweiten stabilen Position ermöglicht.

6. Anordnung (1) nach dem vorhergehenden Anspruch, die ferner eine Ausrüstung (91) beinhaltet, die dazu konfiguriert ist, dem Griffhebel (8) im Weg zu sein, wenn der Block (6) in der ersten stabilen Position angeordnet ist.

7. Anordnung (1) nach einem der vorhergehenden Ansprüche, wobei die sekundäre Vorrichtung (5) mindestens teilweise aus Gummi hergestellt ist, wobei der Hub (K) ferner in Abhängigkeit von einer Steifheit der primären Befestigungsvorrichtung (4) und/oder in Abhängigkeit von einer Steifheit der sekundären Befestigungsvorrichtung (5) definiert wird.

8. Kraftfahrzeug, das eine Anordnung (1) nach einem der Ansprüche 1 bis 7 beinhaltet.

9. Verfahren zur Montage einer Anordnung (1) nach einem der Ansprüche 1 bis 7, beinhaltend:
- einen Schritt des Befestigens mindestens einer primären Befestigungsvorrichtung (4) an dem Modul (2) zur Speicherung und/oder Zirkulation einer Flüssigkeit, das leer ist; dann
- einen Schritt des Positionierens des Moduls (2), das mit der mindestens einen primären Befestigungsvorrichtung (4) ausgerüstet ist, relativ zu dem Stützelement (3), dann
- einen Schritt des Befestigens der mindestens einen primären Befestigungsvorrichtung (4) an dem Stützelement (3) durch Verschrauben; dann
- einen Schritt des Verschiebens des Blocks (6) der primären Befestigungsvorrichtung (4) von der ersten stabilen Position in die zweite stabile Position, um entlang der Richtung (100) eine Kraft von oben nach unten auf das Modul (2) auszuüben; dann
- einen Schritt des Befüllens des Moduls (2) mit einer Flüssigkeit.

10. Verfahren nach dem vorhergehenden Anspruch, wobei das Verschieben des Blocks (6) relativ zu dem Modul (2) zwischen der ersten stabilen Position und der zweiten stabilen Position gemäß einer Drehbewegung um eine Schwenkachse (600), die zu der Richtung (100) parallel oder im Wesentlichen parallel ist, und gemäß einer Translationsbewegung entlang dieser gleichen Richtung ausgeführt wird.

## Claims

1. Arrangement (1) for a motor vehicle, the arrangement (1) comprising a liquid storage and/or circulation module (2), notably a cooling module, a support element (3) for supporting the module (2), at least one primary device (4) for fixing the module (2) to the support element (3), and at least one secondary device (5) for fixing the module (2) to the support element (3), the secondary fixing device (5) being configured to at least partially support the weight of the module (2), **characterized in that**:
- the primary fixing device (4) comprises a pad (6) which is movable in relation to the support element (3) between a first stable position and a second stable position;
- said pad (6) is designed and configured to exert a force on the module (2) from top to bottom along a direction (100) when it is displaced towards the second stable position, a travel (K) of the pad (6) along said direction (100), between the first stable position and the second stable position, being greater than or equal to a variation in position (Δz) along the direction (100) of the module (2) in relation to the support element (3) between a configuration in which the module (2) is empty and a configuration in which the module (2) is filled with liquid.

2. Arrangement (1) according to the preceding claim, wherein the primary fixing device (4) comprises a guide tab (72) for guiding the pad (6) and at least one fixing tab (71) for fixing to the support element (3), the guiding tab (72) comprising at least one guide means (74) for guiding the pad (6) that is able to receive the pad (6), and the fixing tab (71) comprising an opening (73) configured to receive a fixing means (9), notably a screw.

3. Arrangement (1) according to the preceding claim, wherein the pad (6) comprises a base (61) configured to extend in contact with a lower edge (75) of the guide means (74):
- the base (61) comprising at least one flat or substantially flat primary bearing (63) and at least one flat or substantially flat secondary bearing (64) which is separated from the at least one primary bearing (63) by a height (H), measured along the direction (100) and equal to the travel (K) of the pad (6) between its first stable position and its second stable position, the at least one primary bearing (63) and the at least one secondary bearing (64) being connected by a ramp (65);
- the lower edge (75) of the guide means (74) being at least partially complementary to the base (61).

4. Arrangement (1) according to the preceding claim, wherein the ramp (65) has an inclination (α), relative to a plane in which the primary bearing (63) can be inscribed, which is comprised between 5° and 75°, the inclination (α) being defined as a function of the variation in position (Δz) of the module (2).

5. Arrangement (1) according to one of the preceding claims, wherein the primary fixing device (4) comprises a gripping lever (8) which is fitted and mounted in a manner secured to the pad (6) so as to enable the displacement of the pad (6) between the first stable position and the second stable position.

6. Arrangement (1) according to the preceding claim, moreover comprising a fitting (91) configured to interfere with the gripping lever (8) when the pad (6) is disposed in the first stable position.

7. Arrangement (1) according to one of the preceding claims, wherein the secondary device (5) is at least partially made of rubber, the travel (K) moreover being defined as a function of a stiffness of the primary fixing device (4) and/or as a function of a stiffness of the secondary fixing device (5).

8. Motor vehicle comprising an arrangement (1) according to one of Claims 1 to 7.

9. Method for assembling an arrangement (1) according to one of Claims 1 to 7, comprising:
- a step of fixing at least one primary fixing device (4) to the liquid storage and/or circulation module (2), which is empty; then
- a step of positioning the module (2) fitted with the at least one primary fixing device (4) relative to the support element (3); then
- a step of fixing the at least one primary fixing device (4) to the support element (3), notably by screwing; then
- a step of displacing the pad (6) of the primary fixing device (4) from the first stable position to the second stable position so as to exert a force on the module (2) from top to bottom along the direction (100); and then
- a step of filling the module (2) with a liquid.

10. Method according to the preceding claim, wherein the displacement of the pad (6) relative to the module (2) between the first stable position and the second stable position is performed in a rotational movement about a pivot axis (600) which is parallel or substantially parallel to the direction (100) and in a translational movement along this same direction.
